# EUROPEAN PATENT SPECIFICATION

(11) **EP 2 478 763 B1**
(45) Date of publication and mention of the grant of the patent: **07.08.2013**
(21) Application number: 12151759.3
(22) Date of filing: 19.01.2012
(51) Int. Cl.: A01K 5/00

(54) **An apparatus for mixing and dispensing material**
Vorrichtung zum Mischen und Ausgeben von Material
Appareil de mélange et de distribution de matériau

(30) Priority: 20.01.2011 DK 201170029
(43) Date of publication of application: 25.07.2012
(73) Proprietor: Kongskilde Industries A/S, 4180 Sorø (DK)
(72) Inventor: Pedersen, Ove, 6200 Aabenraa (DK)
(74) Representative: Joergensen, Bjoern Barker

(56) References cited:
- EP-A1- 1 982 585
- EP-A1- 2 191 712
- EP-A2- 0 930 005

## Description

The present invention relates to an apparatus for mixing and dispensing material, especially animal feed, said apparatus comprising a container for containing material to be mixed and dispensed, said container having a sidewall, at least one discharge opening in the sidewall, at least two conveying means for ejecting material from the apparatus, namely a cross conveyor for conveying laterally material, and a blower aggregate for ejecting material.

An apparatus of this art is known from EP-A-0 793 911, which discloses a cutter-mixer-feeder and bed-straw spreader wagon with a container and a cross conveyor or rather an unloading door on one side of the container and a blower aggregate on the opposite side of the container, which impose the problem that it may be difficult for an operator from a single position to observe discharge of material from either the unloading door or the blower aggregate, thus making it difficult for the operator from the same position to control discharge from the unloading door and the blower aggregate.

Another apparatus of the above art is known from EP-A-0 930 005, which discloses a towed wagon with a container and a cross belt conveyor in front of the container. A longitudinal belt conveyor is provided for transporting material from the container, i.e. from a discharge opening in the sidewall of the container to the cross belt conveyor. A blower for aspirating and discharging material from the container is shown to be placed on the side of the container. It is suggested that the blower is placed in another position e.g. above the longitudinal belt conveyor, however no indication is provided as to how such an arrangement could be put into practice. In a second embodiment the apparatus is self-propelled rather than towed.

Other examples of related prior art are known e.g. from:
EP-A-0 754 405, which discloses a towed wagon with a container for feed material, a cross belt conveyor in front of the container and a rotating removal and discharge element for assisting transport of the feed material from the container to the cross belt conveyor.

US-A-5 803 375, which discloses a towed wagon with a container and a rear discharge device comprising a drum carrying projection on its surface and rotating about a mainly vertical axis.

DE-A-10 2005 016 358, which discloses a towed wagon with a container for feed material and a blower aggregate mounted on the rear.

EP-A-1 982 585, which discloses a towed wagon with a container for feed material, a blower aggregate in front of the container, a longitudinal belt conveyor for transporting material form a discharge opening in the container sidewall to the blower aggregate, and an unravelling roll positioned movable above the longitudinal belt conveyor.

The object of the present invention is to provide an apparatus for mixing and dispensing material, especial animal feed, which avoids at least some of the problems and deficiencies of the prior art.

This obtained in that a first conveying means and a second conveying means of said at least two conveying means are placed at the same area of the sidewall, and by means to provide for material discharged from the container to be led to either the first conveying means or the second conveying means. Hereby is obtained that the apparatus may be controlled and monitored from a single operator's position.

In an advantageous and usual embodiment the apparatus is carried by ground engaging wheels to be forwarded in a driving direction, and the cross conveyor and the blower aggregate are placed at a front or rear end of the container, preferably at the front end.

The apparatus may be embodied e.g. as a towed wagon or a self-propelled implement. In case of a towed wagon it is advantageous to have the cross conveyor and the blower aggregate placed at the front of the container because it facilitates controlling and monitoring operation from e.g. the driver's seat of a towing tractor.

In a practical embodiment the means to provide for material discharged from the container to be led to either the first conveying means or the second conveying means comprises a valve aggregate readjustable at least to a first position for material to be led to the first conveying means and to a second position for material to be led to the second conveying means.

Preferably the valve aggregate comprises the a movable shielding plate movable between a first position in which it allows material to enter the first conveying means and a second position in which it is shielding said first conveying means from the material. This provided for a simple but effective construction. Preferably in the first position the shielding plate is shielding an entrance of the second conveying means from the material.

In a further practical embodiment at least a portion of the valve aggregate is displaceable, preferably along the sidewall of the container, between a first position for the material to be led to the first conveying means and a second position for the material to be led to the second conveying means. Thus the valve aggregate, or said portion thereof, may have a generally active position providing for actively leading material to one of the first or the second conveying means and a generally passive position allowing the material to approach the other of the first or the second conveying means.

Preferably the valve aggregate comprises lateral guide elements for forming a material guide channel. This facilitates conveyance of the material to the one of the first and second conveying means, i.e. the cross conveyor and the blower aggregate, farthest from the discharge opening in the container sidewall. Further preferably the valve aggregate comprises restricting elements for restricting the effective area of the discharge opening. This provides for restricting the effective area of the discharge opening e.g. to match the area of the material entrance of the blower aggregate. The restricting elements may be integral with the lateral guide elements. Preferably the lateral guide elements comprise movable extensions. This provides for reducing the overall dimensions of the valve aggregate in a passive position.

Preferably the cross conveyor is a running conveyor comprising a running surface, especially a belt conveyor.

Usually a closing member will be provided for closing the discharge opening, said closing member being movable to a closing position, a fully open position and at least one intermediate position in which it is screening a part of the discharge opening. Preferably the movement of the closing member to the fully open position is restricted when the valve aggregate is in a position for leading the material to the first or the second conveying means, preferably the blower aggregate. This provides for (further) restricting the effective area of the discharge opening e.g. to match the area of the material entrance of the blower aggregate.

In the following the invention will be explained in further detail by means of an example of an embodiment with reference to the accompanying drawings, in which
Fig. 1 is a perspective view of an apparatus according to the invention comprising a valve aggregate in a lower position,
Fig. 2 is a perspective view corresponding to Fig. 1, but with the valve aggregate in an upper position,
Fig. 3 shows in detail the valve aggregate in the lower position of Fig. 1,
Fig. 4 shows in detail the valve aggregate in the upper position of Fig. 2,
Fig. 5 is a partial view inside the apparatus seen along arrow V in Figs. 1 and 7,
Fig. 6 is a partial view inside the apparatus seen along arrow VI in Figs. 2 and 8,
Fig. 7 is side view of the apparatus partly in section along line VII-VII in Fig. 5, and
Fig. 8 is side view of the apparatus partly in section along line VIII-VIII in Fig. 6.

In the embodiment shown in the drawings an apparatus according to the present invention comprises a container 1, an undercarriage 2 with ground engaging wheels 3 below the container 1, and at a front end the apparatus comprises a tongue 4 for hitching the apparatus to a tractor (not shown) to provide for towing the apparatus in a forward direction 4a. The container has a sidewall 1a, which is inclined outwardly upwards providing an overall conical shape of the container. Inside the container 1 one or more mixing elements 5 are present, two in the embodiment shown. The mixing elements 5 of which only a part is shown are rotatable around vertical axes. Inside the container 1 the mixing elements 5, which are also known as vertical augers, may shred and chop bales of hay or silage and mix the straw fodder thus chopped with other types of feed as is it generally known in the art.

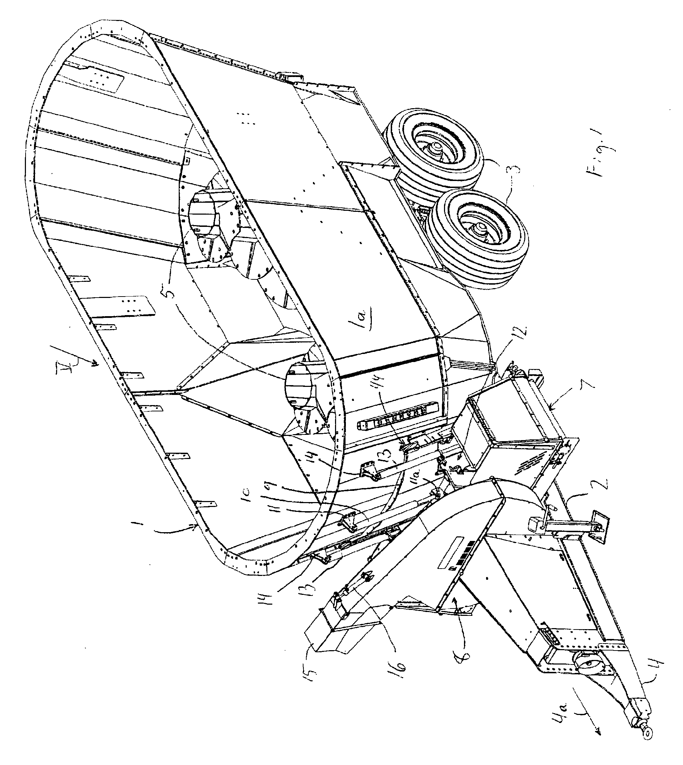

At the front end of the container 1 a discharge opening 6 is present in the sidewall 1a for allowing feed mixed in the container 1 by means of the mixing elements 5 to be dispensed either to a cross conveyor 7 embodied as a belt conveyor with a conveyor belt 7a providing a running surface, or to a blower aggregate or blower unit 8 positioned in front of the cross conveyor 7. The cross conveyor is extending perpendicular to the forward direction 4a. The discharge opening 6 is provided with a closing member 9, which is shiftable up and down along the sidewall 1a by means of a hydraulic cylinder 10 between an upper fully open position and a lower closed position. Fig. 1 shows the closing member 9 in an intermediate position between the fully open position and the closed position. The hydraulic cylinder 10 is attached at one end to a bracket 11 mounted at the front of the container 1 on the sidewall 1a of the container 1, and at the other end a piston rod of the hydraulic cylinder 10 is attached to a bracket 11a positioned on the lower part of the closing member 9.

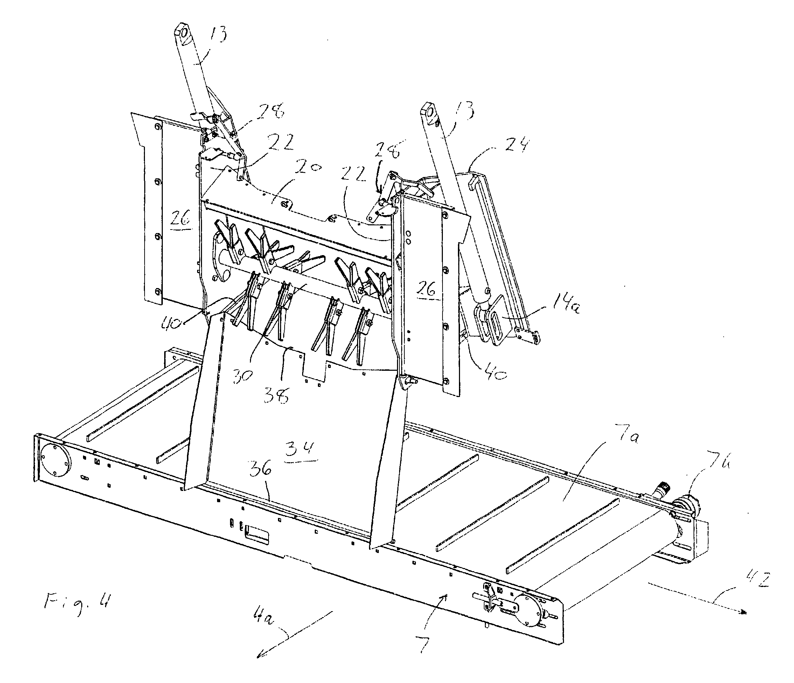

Between the container 1 and the blower unit 8 and above the cross conveyor 7 a valve aggregate embodied as a guiding mechanism 12 is placed. The main portion of the guiding mechanism 12 is shiftable up and down by means of hydraulic cylinders 13 between an upper position and a lower position. The hydraulic cylinders 13 are attached at one end to brackets 14 mounted at the front of the container 1 on the sidewall 1a thereof, and at their other ends piston rods of the hydraulic cylinders 13 are attached to brackets 14a (see e.g. Fig. 4) positioned on a lower part of the guiding mechanism 12.

The cross conveyor 7 which is mounted on the undercarriage 2, is adapted to make a final dispensing to either the right or the left side of the apparatus, the running direction of the conveyor belt 7a being reversible. The dispensing done by the cross conveyor 7 will mainly be eatable feed stuff. The conveyor belt 7a is driven by a hydraulic motor 7b.

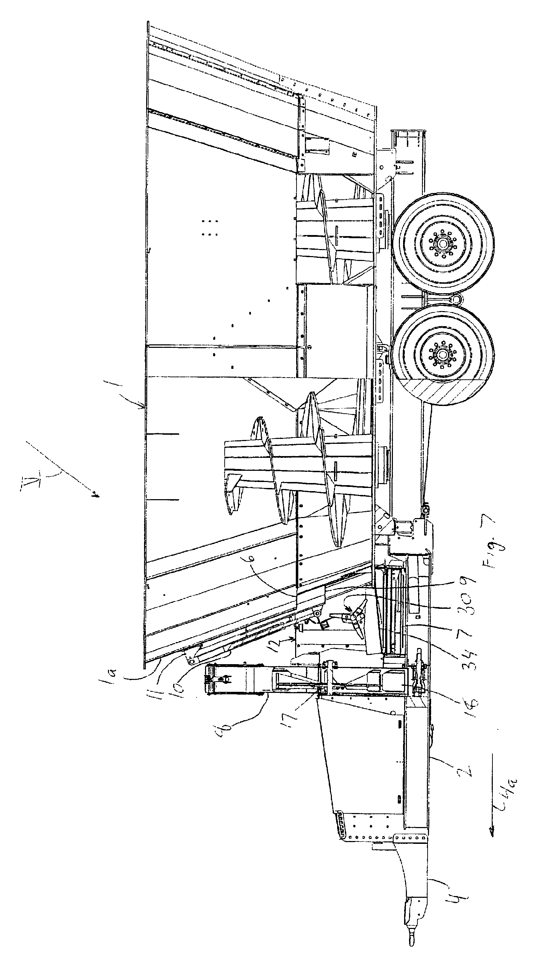

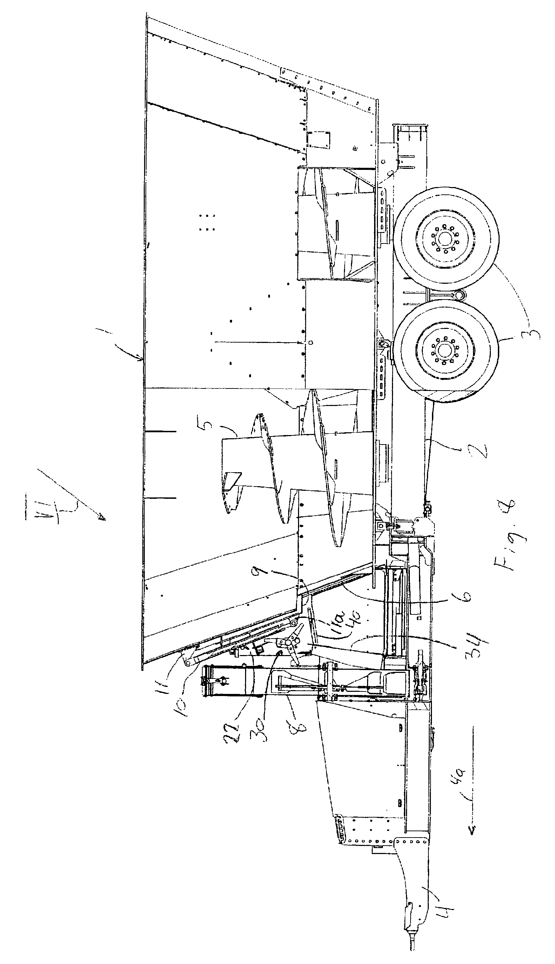

The blower unit 8, which is also mounted on the undercarriage 2, is in the present embodiment adapted to make a final dispensing upwards to the right side of the apparatus. The dispensing done by the blower unit 8 will mainly be bedding material like straw which normally has to be thrown away from the mixer. To adjust the throwing length a folding element 15 is provided at the discharge opening of the blower unit 8. The position of the folding element 15 is adjusted by the extension of a cylinder 16. Inside the blower unit a blower wheel 17 with blower blades 18 is placed (see Figs. 7 and 8). The blower wheel may be mechanical driven by the PTO (Power take off) shaft of the tractor.

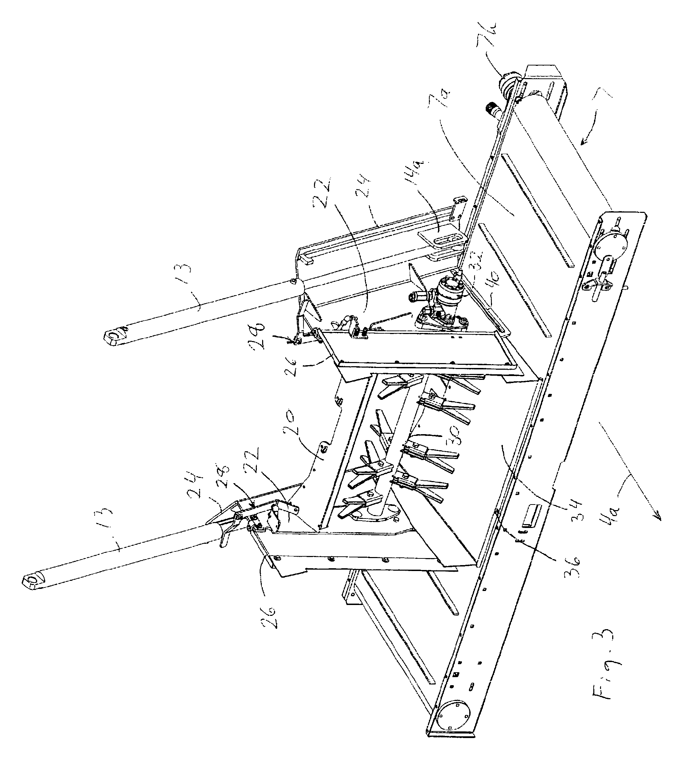

The guiding mechanism 12 comprises a central member 20 connecting two plate members constituting two lateral guide elements or side plates 22. The plate members are bent to constitute further two restricting element 24, which are thus integral with the side plates 22. At an edge opposite the restricting element 24 of each side plate 20 a swing plate 26 is hinged to provide a movable extension of the side plate 20. A lever mechanism 28 is attached to each swing plate 26 for moving the swing plate between first position (see Fig. 3) parallel to the respective side plate 20 and a second position (see Fig. 4) rotated approximately by 90° relative to the first position around the hinge axis.

As it is seen in Figs. 3 and 4 the brackets 14a are attached to the restricting elements 24.

Below the central member 20 a rotor 30 is mounted to be driven by a hydraulic motor 32 (se Fig. 3 and 4).

A shielding plate 34 with upwards folded side parts has a front end 36 and a rear end 38. The front end 36 of the shielding plate is hinged at a front side of the cross conveyor 7, and the rear end 38 of the shielding plate is hinged through slots 40 in the lower part of the side plates 22 thus allowing the shielding plate 34 to rotate around an axis parallel to the cross conveyor 7 and positioned at the front lateral side thereof while the rear end 38 of the shielding plate is allowed to rotate and slide along the slots 40.

A releasable blocking element 44 is provided to restrict the upward movement of the closing member 9 when the guiding mechanism 12 is in the lower position. The releasable blocking mechanism is not shown in detail, but it comprises a rotatable member with a projection that in a first position of the rotatable member blocks the passage of the closing member 9 in an upwards direction while in a second position of the rotatable member the projection will allow such passage of the closing member 9. The rotatable member comprises a sloping portion engageable by the guiding mechanism 12 whereby the rotatable member is rotated to its second position when the guiding mechanism 12 is transfer to its upper position.

The guiding mechanism 12 works as follows.

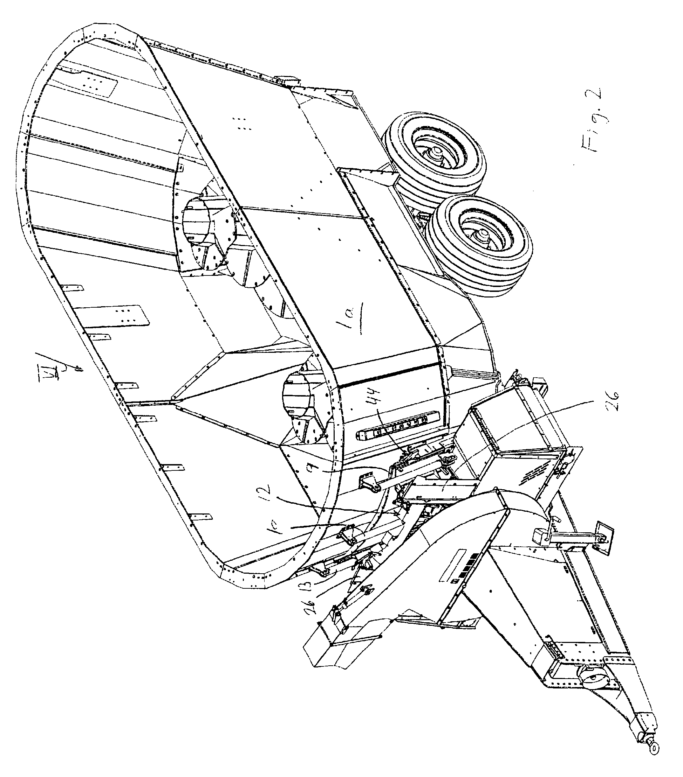

The guiding mechanism 12 can by means of the hydraulic cylinders 13 be positioned in the lower position indicated in Figs. 1, 3, 5 and 7 or in the upper position indicated in Figs. 2, 4, 6 and 8.

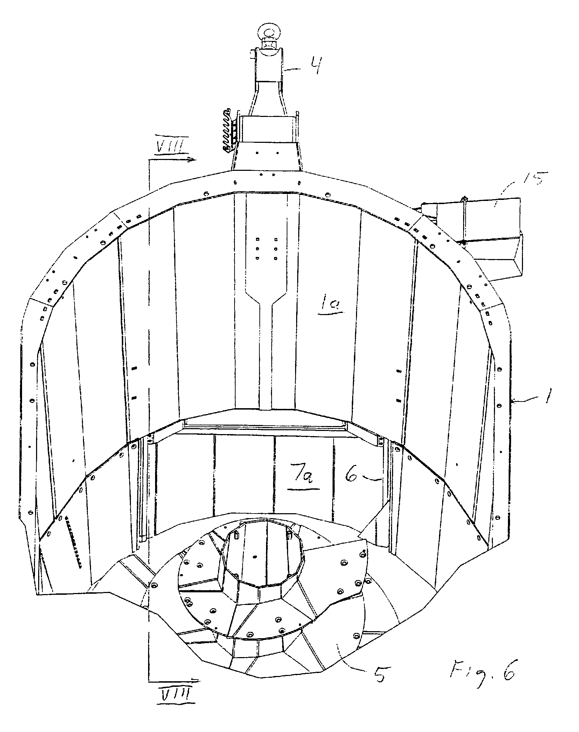

In the upper position of the guiding mechanism 12 the swing plates 26 are placed in their second position in order to reduce the extend of the guiding mechanism in the forward direction 4a since the space between the container's sidewall 1a and the blower unit 8 is reduced at higher positions due to the inclination of the sidewall 1a. The restricting elements 24 are substantially raised to a position above the discharge opening 6 and also the closing member 9 is raised to a position substantially above the discharge opening 6 the effective are of which is thus not restricted, see Figs. 6 and 8. The shielding plate 34 is rotated to the upright position shown e.g. in Figs. 4 and 8, the rear end 38 being shifted towards the front end of the slots 40.

In this upper position of the guiding mechanism 12 material exiting the container 1 through the discharge opening 6 will be deposited on the conveyor belt 7a of the cross conveyor 7 to be moved laterally and be ejected thereby as indicated by arrow 42 in Fig. 4 or opposite if the driving direction of hydraulic motor 7b is reversed. The entrance of the blower unit 8 is shielded or blocked from the material exiting the container 1 by the shielding plate 34, which also ensures that the material will not fall over the far lateral side of the cross conveyor 7 relative to the discharge opening 6.

In the lower position of the guiding mechanism 12 the shielding plate 34 is rotated to a substantially horizontal position as indicated e.g. in Figs. 3 and 7 the rear end 38 being shifted towards the rear ends of the slots 40. The swing plates 26 are rotated to their first position, whereby the shielding plate 34, the side plates 22 and the swing plates 26 extending the side plates 22 form a channel extending from the discharge opening 6 to the entrance of the blower unit 8. The rotor 30 is rotated in the clockwise direction as seen in Fig. 7 thereby facilitating transport of material exiting the discharge opening 6 to the entrance of the blower unit 8 to be ejected thereby. In this position the shielding plate 34 is shielding the cross conveyor 7 from the material exiting the discharge opening 6.

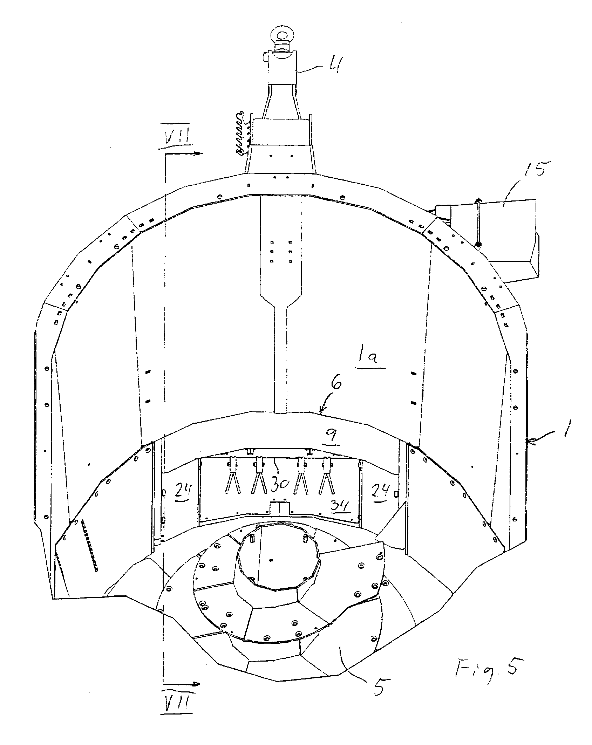

In the lower position of the guiding mechanism 12 the restricting element 24 are positioned in front of the discharge opening 6 thus restricting its effective area and the closing member 9 is placed in an intermediate position further restricting the effective area of the discharge opening from above as it is seen in Figs. 5 and 7. The restricted area of the discharge opening corresponds to the entrance of the blower unit 8.

It is understood that the guiding mechanism 12 constitutes a valve aggregate performing the valve function of directing material exiting the container 1 through the discharge opening 6 either to the cross conveyor 7 or to the blower unit 8, whereby, in the embodiment shown and described with reference to the Figures, the direction of material to the blower unit 8 is performed actively while direction of the material to the cross conveyor is mainly performed inactively.

It is seen that the cross conveyor 7 and the blower unit 8 are placed at the same area of the sidewall 1a, namely at the front of the container 1.

## Claims

1. An apparatus for mixing and dispensing material, especially animal feed, said apparatus comprising a container (1) for containing material to be mixed and dispensed, said container (1) having a sidewall (1a), at least one discharge opening (6) in the sidewall (1a), at least two conveying means (7, 8) for ejecting material from the apparatus, namely a cross conveyor (7) for conveying laterally material, and a blower aggregate (8) for ejecting material, **characterized in that** a first conveying means (7) and a second conveying means (8) of said at least two conveying means (7, 8) are placed at the same area of the sidewall (1a), and by means (12) to provide for material discharged from the container (1) to be led to either the first conveying means (7) or the second conveying means (8).

2. An apparatus for mixing and dispensing material according to claim 1, **characterized in that** the means to provide for material discharged from the container to be led to either the first conveying means (7) or the second conveying means (8) comprises a valve aggregate (12) readjustable at least to a first position for material to be led to the first conveying means (7) and to a second position for material to be led to the second conveying means (8).

3. An apparatus for mixing and dispensing material according to claim 2, **characterized in that** the valve aggregate (12) comprises a movable shielding plate (34) movable between a first position in which it allows material to enter the first conveying means (7) and a second position in which it is shielding said first conveying means (7) from the material.

4. An apparatus for mixing and dispensing material according to claim 3, **characterized in that** in the first position the shielding plate (34) is shielding an entrance of the second conveying means (8) from the material.

5. An apparatus for mixing and dispensing material according to any of the claims 2 to 4, **characterized in that** at least a portion of the valve aggregate (12) is displaceable, preferably along the sidewall (1a) of the container, between a first position for the material to be led to the first conveying means (7) and a second position for the material to be led to the second conveying means (8).

6. An apparatus for mixing and dispensing material according to any of the claims 2 to 5, **characterized in that** the valve aggregate (12) comprises lateral guide elements (22) for forming a material guide channel.

7. An apparatus for mixing and dispensing material according to claim 6, **characterized by** restricting elements (24) for restricting the effective area of the discharge opening (6).

8. An apparatus for mixing and dispensing material according to claim 5 or 6, **characterized in that** the lateral guide elements (22) comprise movable extensions (26).

9. An apparatus for mixing and dispensing material according to any of claims 1 to 8, **characterized in that** the cross conveyor (7) is a running conveyor comprising a running surface (7a), especially a belt conveyor.

10. An apparatus for mixing and dispensing material according to any of claims 2 to 9, comprising a closing member (9) for closing the discharge opening (6), said closing member being movable to a closing position, a fully open position and at least one intermediate position in which it is screening a part of the discharge opening (6), **characterized by** means (44) for restricting the movement of the closing member to the fully open position when the valve aggregate (12) is in a position for leading the material to the blower aggregate (8).

## Patentansprüche

1. Vorrichtung zum Mischen und Ausgeben von Material, insbesondere Tierfutter, wobei die Vorrichtung einen Behälter (1) zum Aufnehmen von Material umfasst, das gemischt und ausgegeben werden soll, wobei der Behälter (1) eine Seitenwand (1a), mindestens eine Abgabeöffnung (6) in der Seitenwand (1a), mindestens zwei Fördermittel (7, 8) zum Auswerfen von Material aus der Vorrichtung, nämlich einen Querförderer (7) zum seitlichen Fördern von Material und ein Gebläseaggregat (8) zum Auswerfen von Material umfasst,
**dadurch gekennzeichnet, dass** ein erstes Fördermittel (7) und ein zweites Fördermittel (8) der mindestens zwei Fördermittel (7, 8) in dem gleichen Bereich der Seitenwand (1a) angeordnet sind, und **gekennzeichnet durch** Mittel (12), die dafür sorgen, dass Material, das aus dem Behälter (1) abgegeben wird, entweder zu dem ersten Fördermittel (7) oder dem zweiten Fördermittel (8) geleitet wird.

2. Vorrichtung zum Mischen und Ausgeben von Material nach Anspruch 1, **dadurch gekennzeichnet, dass** die Mittel, die dafür sorgen, dass Material, das aus dem Behälter (1) abgegeben wird, entweder zu dem ersten Fördermittel (7) oder dem zweiten Fördermittel (8) geleitet wird, ein Ventilaggregat (12) umfassen, das in mindestens eine erste Position, in der das Material zu dem ersten Fördermittel (7) geleitet wird, und in eine zweite Position, in der das Material zu dem zweiten Fördermittel (8) geleitet wird, verstellbar ist.

3. Vorrichtung zum Mischen und Ausgeben von Material nach Anspruch 2, **dadurch gekennzeichnet, dass** das Ventilaggregat (12) eine bewegliche Abschirmplatte (34) umfasst, die zwischen einer ersten Position, in der Material in das erste Fördermittel (7) eintreten kann, und einer zweiten Position, in der sie das erste Fördermittel (7) von dem Material abschirmt, beweglich ist.

4. Vorrichtung zum Mischen und Ausgeben von Material nach Anspruch 3, **dadurch gekennzeichnet, dass** die Abschirmplatte (34) in der ersten Position einen Eintritt des Materials von dem zweiten Fördermittel (8) abschirmt.

5. Vorrichtung zum Mischen und Ausgeben von Material nach einem der Ansprüche 2 bis 4, **dadurch gekennzeichnet, dass** mindestens ein Teil des Ventilaggregats (12) vorzugsweise entlang der Seitenwand (1a) des Behälters zwischen einer ersten Position, in der das Material zu dem ersten Fördermittel (7) geleitet wird, und einer zweiten Position, in der das Material zu dem zweiten Fördermittel (8) geleitet wird, verschiebbar ist.

6. Vorrichtung zum Mischen und Ausgeben von Material nach einem der Ansprüche 2 bis 5, **dadurch gekennzeichnet, dass** das Ventilaggregat (12) seitliche Führungselemente (22) zum Bilden eines Materialführungskanals umfasst.

7. Vorrichtung zum Mischen und Ausgeben von Material nach Anspruch 6, **gekennzeichnet durch** Einschränkungselemente (24) zum Einschränken des wirksamen Bereichs der Abgabeöffnung (6).

8. Vorrichtung zum Mischen und Ausgeben von Material nach Anspruch 5 oder 6, **dadurch gekennzeichnet, dass** die seitlichen Führungselemente (22) bewegliche Verlängerungen (26) umfassen.

9. Vorrichtung zum Mischen und Ausgeben von Material nach einem der Ansprüche 1 bis 8, **dadurch gekennzeichnet, dass** der Querförderer (7) ein laufender Förderer, der eine Lauffläche (7a) umfasst, insbesondere ein Bandförderer ist.

10. Vorrichtung zum Mischen und Ausgeben von Material nach einem der Ansprüche 2 bis 9, umfassend ein Verschlusselement (9) zum Verschließen der Abgabeöffnung (6), wobei das Verschlusselement in eine Verschlussposition, in eine vollständig offene Position und mindestens eine Zwischenposition, in der es einen Teil der Abgabeöffnung (6) abschirmt, beweglich ist, **gekennzeichnet durch** Mittel (44) zum Einschränken der Bewegung des Verschlusselements in die vollständig offene Position, wenn das Ventilaggregat (12) sich in einer Position befindet, um das Material zu dem Gebläseaggregat (8) zu leiten.

## Revendications

1. Appareil de mélange et de distribution de matériau, en particulier des aliments pour animaux, ledit appareil comprenant un conteneur (1) pour contenir un matériau à mélanger et à distribuer, ledit conteneur (1) présentant une paroi latérale (1a), au moins une ouverture de décharge (6) dans la paroi latérale (1a), au moyens deux moyens de transport (7, 8) pour éjecter le matériau hors de l'appareil, à savoir un transporteur transversal (7) pour transporter le matériau latéralement, et un bloc de soufflantes (8) pour éjecter le matériau, **caractérisé en ce que** des premiers moyens de transport (7) et des deuxièmes moyens de transport (8) desdits au moins deux moyens de transport (7, 8) sont placés dans la même région de la paroi latérale (1a), et par des moyens (12) pour fournir le matériau déchargé du conteneur (1) à conduire soit aux premiers moyens de transport (7), soit aux deuxièmes moyens de transport (8).

2. Appareil de mélange et de distribution de matériau selon la revendication 1, **caractérisé en ce que** les moyens pour fournir le matériau déchargé du conteneur et à conduire soit aux premiers moyens de transport (7), soit aux deuxièmes moyens de transport (8) comprennent un bloc de vannes (12) réglable dans au moins une première position pour le matériau à conduire aux premiers moyens de transport (7) et dans une deuxième position pour le matériau à conduire aux deuxièmes moyens de transport (8).

3. Appareil de mélange et de distribution de matériau selon la revendication 2, **caractérisé en ce que** le bloc de vannes (12) comprend une plaque de protection mobile (34) déplaçable entre une première position, dans laquelle elle permet au matériau d'entrer dans les premiers moyens de transport (7), et une deuxième position, dans laquelle elle isole lesdites premiers moyens de transport (7) du matériau.

4. Appareil de mélange et de distribution de matériau selon la revendication 3, **caractérisé en ce que**, dans la première position, la plaque de protection (34) isole une entrée desdits deuxièmes moyens de transport (8) du matériau.

5. Appareil de mélange et de distribution de matériau selon l'une quelconque des revendications 2 à 4, **caractérisé en ce qu'**au moins une partie du bloc de vannes (12) est déplaçable, de préférence le long de la paroi latérale (1a) du conteneur, entre une première position pour le matériau à conduire aux premiers moyens de transport (7) et une deuxième position pour le matériau à conduire aux deuxièmes moyens de transport (8).

6. Appareil de mélange et de distribution de matériau selon l'une quelconque des revendications 2 à 5, **caractérisé en ce que** le bloc de vannes (12) comprend des éléments de guidage latéraux (22) pour former un canal de guidage de matériau.

7. Appareil de mélange et de distribution de matériau selon la revendication 6, **caractérisé par** des éléments de restriction (24) pour restreindre la surface effective de l'ouverture de décharge (6).

8. Appareil de mélange et de distribution de matériau selon la revendication 5 ou 6, **caractérisé en ce que** les éléments de guidage latéraux (22) comprennent des extensions mobiles (26).

9. Appareil de mélange et de distribution de matériau selon l'une quelconque des revendications 1 à 8, **caractérisé en ce que** le transporteur transversal (7) est un transporteur courant comprenant une surface courante (7a), en particulier une bande transporteuse.

10. Appareil de mélange et de distribution de matériau selon l'une quelconque des revendications 2 à 9, comprenant un élément de fermeture (9) pour fermer l'ouverture de décharge (6), ledit élément de fermeture étant déplaçable dans une position fermée, une position complètement ouverte et au moins une position intermédiaire dans laquelle il obstrue une partie de l'ouverture de décharge (6), **caractérisé par** des moyens (44) pour restreindre le déplacement de l'élément de fermeture vers la position complètement ouverte lorsque le bloc de vannes (12) se trouve dans une position pour conduire le matériau au bloc de soufflantes (8).
